# EUROPEAN PATENT SPECIFICATION

(11) **EP 2 219 431 B1**
(45) Date of publication and mention of the grant of the patent: **22.06.2011**
(21) Application number: 08829953.2
(22) Date of filing: 05.12.2008
(51) Int. Cl.: A01G 9/12

(54) **DEVICE FOR MANUFACTURING PRESS POTS**
VORRICHTUNG ZUR HERSTELLUNG VON PRESSTÖPFEN
DISPOSITIF DE FABRICATION DE POTS DE TERREAU COMPRIMÉ

(30) Priority: 12.12.2007 NL 1034818
(43) Date of publication of application: 25.08.2010
(60) Divisional application: 11163911.8
(73) Proprietor: Visser's-Gravendeel Holding B.V., 3295 KH 's-Gravendeel (NL)
(72) Inventor: VISSER, Anthony, NL-3295 CT 's-Gravendeel (NL)
(74) Representative: Grootscholten, Johannes A.M.
(86) International application number: PCT/NL2008/000270
(87) International publication number: WO 2009/075568

(56) References cited:
- DE-B- 1 273 894
- FR-A- 2 624 340
- NL-A- 7 707 495
- NL-C2- 1 003 364

## Description

The present invention relates to a device for manufacturing press pots, as known from DE-1273894, which constitutes the closest prior art in relation to the present invention, the features of which are defined in the precharacterising portion of the appended independent claim.

Problems with the prior art relate to layer structures occurring in the potting compost in the press pots. Manual intervention is thus still always required.

The present invention has for its object to obviate or at least alleviate the problems of the known art, for which purpose a device according to the present invention is distinguished by the features defined in independent claim number 1. According to the invention the knife is in at least two parts. There may be some distance between the knife parts, although knife cuts preferably connect to each other even if they are made at a distance. The layered structure of the individual press pots can be prevented particularly by not arranging cuts running transversely of each other or even intersecting each other simultaneously, but successively. It is recommended to limit the time intervals and to keep intermediate distances between the knives small in order that the structure of the press pots manifest as little as possible effects which could result in breakage. The problem of the layered structure of the press pots can here be solved to a large extent, if not entirely, since the separate knife parts are configured such that the knife comprises: a first cutter and at least one second cutter oriented substantially transversely of the first cutter, wherein the first and second cutter are individually movable for the purpose of acting successively on the potting compost. The individual mobility or actuation of the knife parts or cutters oriented transversely of each other can to a large extent prevent the formation of layers in, and so layered structure of, the formed or cut press pots. This could well be a consequence of successive instead of simultaneous load in the directions transversely of each other on the layer of potting compost, whereby the forming of layers can be prevented or avoided to far-reaching extent. Features according to the other independent claims which can be deemed as dependent and independent (partial) solutions here also contribute toward providing the whole solution.

In a possible embodiment it is thus highly favourable and desirable for the first cutter to be oriented transversely of the conveyor. In addition, it may be extremely desirable or favourable for the second cutter to comprise at least two cutting elements having a length corresponding to an intended size of the press pots to be manufactured. The cutter oriented transversely thereof can then protrude along the cutting elements, after or before these cutting elements are inserted into the layer of potting compost, in order to finally form the press pots, in particular after this process of insertion and cutting of the cutter and the cutting elements is repeated at some distance, since the conveyor displaces the layer of potting compost for cutting through a distance between the successive insertion or cutting operations by both the cutter and the cutting elements, which is therefore followed by displacement with the conveyor, after which the cutting operation is repeated before a subsequent transporting operation is performed.

In a preferred embodiment the device has the feature that the pressing means and the knife form a unit at a single position along the conveyor. A further simplification can thus be realized compared to a configuration with separate pressing means and a knife, although such separate pressing means and a knife are not precluded from the protection of the present invention.

In another preferred embodiment the device has the feature that gripping means connect to the conveyor which can be selectively set into operation and which grip and transfer the cut pot forms into a container intended for this purpose. Such gripping means can be well synchronized with the pressing means and the knife, and also with the throughput speed of potting compost transported by the conveyor past the pressing means and the knife to the gripping means. The device according to the present invention can have the feature here that it comprises: a supply for providing empty containers at the gripping means; and a discharge for discharging containers filled with pot forms from the gripping means. A device which forms a unit to an even greater extent is thus provided with as many functional components as possible which can be automated and which can together supply containers or crates with press pots.

In another preferred embodiment the device has the feature that the conveyor comprises a conveyor belt trained in an endless loop round reversing wheels, wherein a drive motor is coupled to a reversing wheel of the conveyor the furthest removed from the feed. A configuration is hereby realized which pulls the feed side of the conveyor belt trained in an endless loop through the conveyor and thus the frame, whereby a more uniform progression of the belt can be brought about than if a driven reversing wheel pulls on the feedback side of the belt on the side opposite the feed.

In a very favourable embodiment the drive motor is connected, via a ratchet wheel for stepwise advancing of the conveyor, to at least one of the reversing wheels of the conveyor, in particular - though not exclusively - the reversing wheel of the conveyor located furthest from the feed. A ratchet wheel can be very readily used to effect a stroke of the driven reversing wheel through an angular distance, then to be returned to a starting position for driving. The angular distance can be selected and/or set so as to correspond with the distance on the conveyor at which rows of press pots have been or are being formed, and the angular distance corresponding to this distance on the conveyor can thus be selected to correspond to the dimensions along the advancing direction of the conveyor subject to those press pots to be cut with a chosen knife or set of knives.

In another preferred embodiment the device has the feature that at least the knife is received in a cassette releasable from the frame. It is thus possible to opt for a cassette for forming or cutting press pots of desired dimensions and fitting into a container or crate of pre-known dimensions which can essentially also vary per se. It can be favourable here that at least one of a number of cassettes can be arranged on the frame by means of releasable couplings. The associated knife (or knives) can here be designed for the purpose of cutting the press pots into desired dimensions from a layer of potting compost on the conveyor. Exchanging cassettes then requires no, or at least fewer, alignment and adjustment operations, because the setting and/or alignment of the knife or knives per cassette is already correct, and the cassette must be mounted on or to clearly defined support points. Additionally or alternatively, it can be favourable here when at least the pressing means are also arranged in the cassette. This has the same advantages for alignment and positioning thereof as for placing of the knife (or knives), and it is also the case for the pressing means and the knife that this is also favourable for the dimensioning of the assemblies of press pots to be formed or cut. It can further be favourable when the device comprises a knife drive for the knife which is associated via a releasable coupling with the knife. The cassette can be placed very precisely and accurately relative to the frame, and the knife therein is also positioned fixedly relative to the cassette itself. In order to now avoid a drive for an associated knife having to be arranged in each cassette, it is then favourable when the knife drive is mounted semi-permanently on the frame. Using the coupling between the knife drive and the knife the drive can then be arranged on the frame of the device, and the cassettes with desired knife configurations remain selectable as desired or required without each cassette having to be provided with its own knife drive, whereby the costs of the cassettes and the system as a whole can be minimized. It is also possible here for a transmission to be arranged between the knife and the knife drive with synchronizing means for adjusting the movements of the conveyor and the knife or knives relative to the potting compost. These synchronizing means can comprise and actuation or control of a motor for driving the knife or knives for the purpose of setting the knives into operation at desired points in time subject to the forward movement of the conveyor and the dimensions of the press pots formed or cut with the knife. This can include a detection mechanism or electronic alternative with which the motor fixedly arranged on the frame can be activated. In a specific embodiment use can be made of a hydraulic or pneumatic cylinder as motor or as knife drive. Such a knife drive is easy to actuate, certainly in response to a detected position of the conveyor. This detection can otherwise take place on or at a drive of the conveyor. In an embodiment wherein a movement of a motor is converted into steps, for instance with a ratchet wheel, or when a stepping motor is used, such a manner of synchronizing the knives can be realized in very favourable and mutually corresponding manner.

It is important to adapt the diverse operations to each other in an automated process. It can be extremely favourable, if not of essential importance, for this purpose that the conveyor advances stepwise and the length at least corresponds to an advancing distance of one step at a time of the conveyor.

The invention will be described in more detail hereinbelow on the basis of the accompanying figures, which show a non-limitative example of a device as embodiment of the present invention, wherein the same parts, components and aspects are designated with the same reference numerals, and in which:
fig. 1 is a perspective view of a part of a device according to the present invention;
fig. 2 shows in more detail a part of the device of fig. 1 designated with 2;
fig. 3, 4 and 5 show the operation of the part shown in fig. 2;
fig. 6 shows an alternative embodiment to that shown in the foregoing figures; and
fig. 7 shows a schematic representation of another aspect of the present invention.

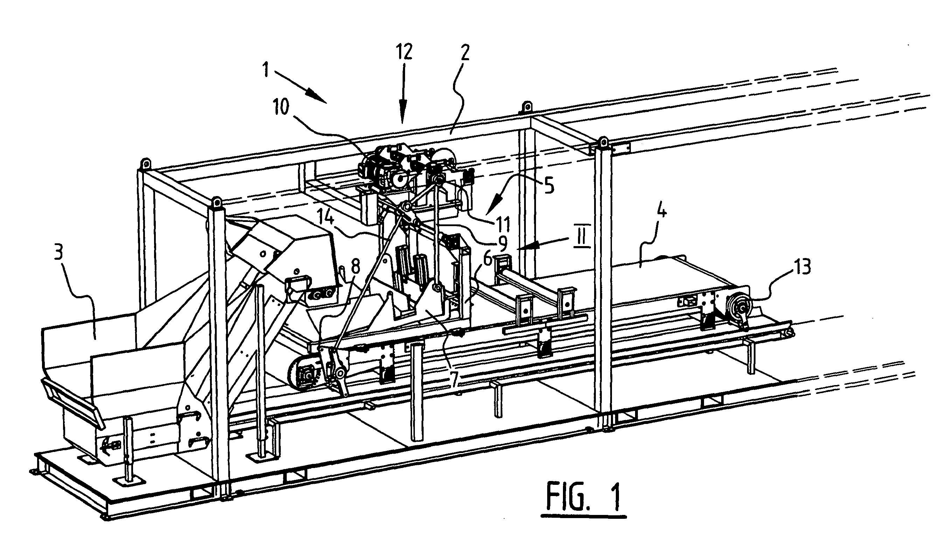

Fig. 1 shows a device 1 according to the present invention. Device 1 comprises a frame 2 in which a number of components and elements and aspects and properties are arranged and implemented as will be discussed below. On the left-hand side in fig. 1 is arranged a feed 3 for providing potting compost to frame 2. This feeds potting compost deposited therein to a conveyor in the form of conveyor belt 4. A replaceable module 5 is mounted releasably on frame 2 on or above conveyor belt 4. Module 5 comprises a sub-frame 6 to be attached to frame 2. A U-frame 7 is arranged hingedly or hingeably in sub-frame 6. U-frame 7 is held in sub-frame 6 for pivoting about tilting point 8. The free end of U-frame 7 is suspended from a drive rod 9, the end of which opposite U-frame 7 is coupled to a motor 10, for which purpose an eccentric transmission 11 is applied. A rotating movement generated by motor 10 is converted by the eccentric transmission in combination with drive rod 9 into an up and downward movement of U-frame 7. As will be further described below, the pre-tamping, cutting, levelling and post-tamping are hereby realized, and it is also possible to provide for pressing in of seeds or forming of cavities (not shown) in the press pots for forming.

It is noted that motor 10 is also coupled via a transmission 12 and eccentric transmission 11 to a ratchet drive element 13 which acts on conveyor belt 4. The ratchet drive element 13 is arranged on the front side opposite feed 3. Use is preferably made here of a system of rods for transmission to a ratchet drive element 13 on the front side remote from the feed, and still more preferably at the reversing wheel at that location around which conveyor belt 4 is trained. A pulling action can thus be performed on conveyor belt 4. A pulling action is preferable to a pushing action on conveyor belt 4 in order to bring about a uniform throughfeed of potting compost over conveyor belt 4.

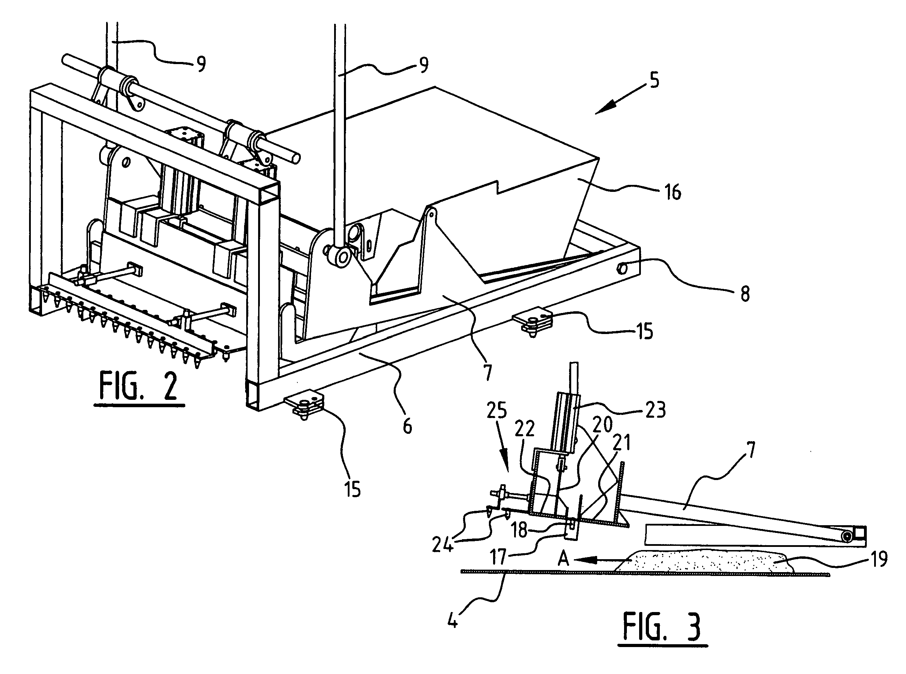

A ratchet drive element 13 has the advantage that a very simple rod driving can be applied which can likewise be coupled to eccentric transmission 11, just as drive rod 9 for U-frame 7. A reciprocal, substantially linear movement of the drive rod coupled to the ratchet drive element suffices to displace the conveyor belt each time through a distance determined by ratchet drive element 13. This distance preferably corresponds to the length of the press pots to be formed in the direction of transport over conveyor belt 4, which will be further described below. It is at least desirable that the distance is no greater than the width of short knives 17, for instance in the view of figure 3, in order to achieve that the cuts in the layer of potting compost 19 made by knives 17 connect to each other. As alternative to a ratchet drive element 13, use can also be made of a stepping motor or an intermittently driven regular motor, although such a drive based on a ratchet has evident advantages in respect of the plurality of stepwise transport movements of conveyor belt 4 and the wear which the use of stepping motors or intermittently driven regular motors can involve.

Drive rod 14 between on one side the motor 10 and transmission 12 and on the other the ratchet drive element 13 is arranged fixedly. When it is desired to produce other sizes of press pot, module 5 is replaced with other cutting knives, which is further elucidated hereinbelow. However, in order to adjust the advance of a layer of potting compost on conveyor belt 4 to, and synchronize it with, the length in the direction of movement of the press pots to be formed or cut, the drive of the motor, when it acts on ratchet drive element 13, must be set with transmission 12 to one of a number of possible transmission ratios. The transmission can be realized in various ways for this purpose. Transmission 12 can be switched in mechanical manner between a number of transmission ratios implemented therein. A separate motor can also be applied to drive the conveyor belt, although this involves an increase in the complexity of the overall device 1 which, with a single motor 10 and a transmission 12 for drive rod 14 on the one hand and a simultaneous transmission via drive rod 9 on U-frame 7, takes a very simple form. Fig. 2 shows module 5. As stated, module 5 is replaceable when it is necessary to begin producing other sizes of press pot. Module 5 is provided for this purpose with suspension points 15 which can be aligned very precisely with corresponding suspension points in frame 2 in order to bring about an accurate positioning and alignment of module 5 relative to the conveyor belt. U-frame 7 is suspended hingedly on shaft 8 in sub-frame 6 and, as already noted above, the up and downward movement of U-frame 7 is generated via drive rods 9. Arranged on U-frame 7 is a bin 16 into which feed 3 deposits potting compost. The potting compost deposited into bin 16 is carried along by the conveyor belt to the left in fig. 2 under module 5. This is shown for instance in fig. 3 and indicated with arrow A. As the potting compost is displaced to the left on conveyor belt 4 in the direction of arrow A in fig. 3, U-frame 7 is moved downward by drive rod 9. A succession of short knives 17 placed in parallel with pins 18 therebetween herein descends to respectively divide the potting compost into segments and create cavities therebetween. Knives 17 extend as plate-like elements in the direction of movement of arrow A. A knife 20 movable up and downward relative to U-frame 7 is arranged a short distance behind the short knives 17 on U-frame 7. Knife 20 is arranged a short distance behind short knives 17 in the direction of movement of arrow A. Once the short knives 17 have come to lie on conveyor belt 4, a cylinder 21, for instance a pneumatic cylinder 21, is actuated in order to press knife 20 downward into the layer of potting compost 19.

A pre-tamping surface 21 is realized to the side of short knives 17. At each downward stroke of U-frame 7 the layer of potting compost 19 is compressed under pre-tamping element 21. A post-tamping surface 22 is formed behind short knives 17 and preferably also behind the wide long knife 21. Short knives 17 can for instance be arranged on a plate which forms both pre-tamping surfaces 21 and post-tamping surfaces 22. The wide knife 20 can then be driven downward and upward by cylinder 23 through a recess or slot in the post-tamping surface.

In the line of the pre-tamping surfaces and post-tamping surfaces 21, 22 protrusions 24 can further be arranged at an adjustable distance in order to deepen the cavities formed by pins 18, to press seeds therein or to fulfil another function. For the adjustable distance between rows of protrusions 24 use can be made of an adjusting mechanism 25 with which the intermediate distance between each of the two rows of protrusions 24 can be adjusted.

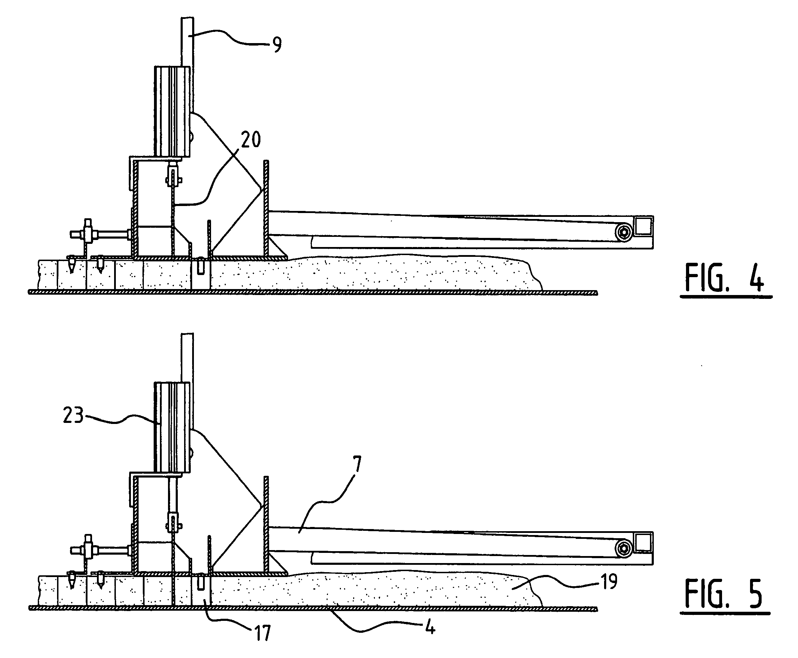

Fig. 4 shows how U-frame 7 is pressed downward onto the layer of potting compost with the long wide knife 20 in a retracted position, and fig. 5 shows how the long wide knife 20 is then pressed downward by the action of the preferably pneumatic cylinder 23. The distance between short knives 17 and the long wide knife 20 is not characteristic here for a specific embodiment of the invention. The long wide knife 20 is preferably placed closely behind short knives 17. Once the position of fig. 5 has been reached, the long wide knife 20 is retracted again by cylinder 23 and short knives 17 are only retracted thereafter or simultaneously with the whole U-frame 7 on drive rod 9. It is also possible to first pull up the whole U-frame 7 and only then to retract the wide long knife 20 in U-frame 7.

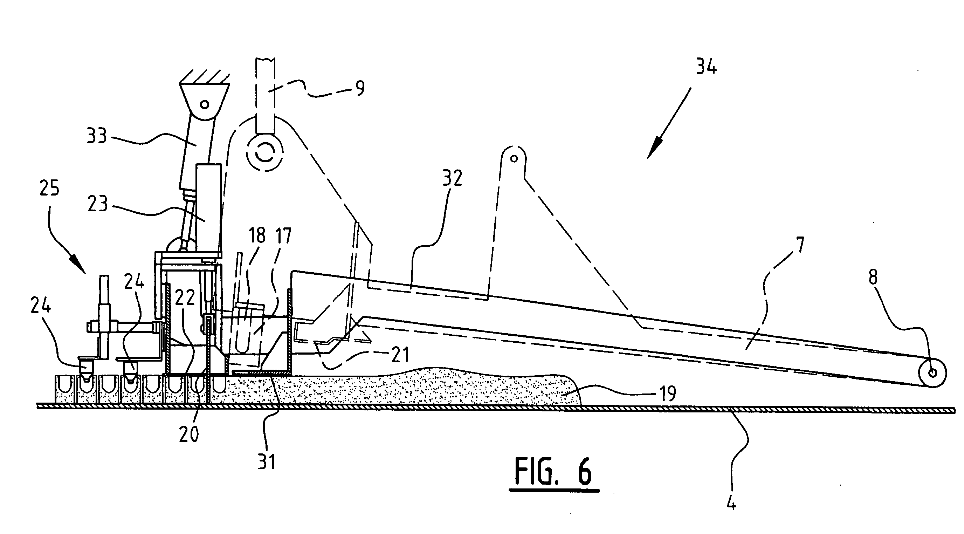

Fig. 6 shows an alternative embodiment of a device 34 according to the invention, wherein use is made of a pivot arm 32 as addition to U-frame 7. Pivot arm 32 is driven with an additional drive cylinder 33 and U-frame 7 with drive rod 9. Pivot arm 32 is pivotable about the same shaft 8 as U-frame 7. Short knives 17 and pins 18 therebetween are connected to U-frame 7, while the other active components as shown in fig. 2-5 are connected to pivot arm 32.

Operation is as follows.

Pivot arm 32 is first lowered onto the layer of potting compost 19. Having come down onto the top side of the layer of potting compost 19 with pre-tamping surface 21 or a levelling surface 31, cylinder 23 is actuated to urge the wide knife 20 perpendicularly into the layer of potting compost and thus make a cut. The movement of wide knife 20, which is as perpendicular as possible, contributes towards solving the problem of undesired layer formation in the press pots, since it causes hardly any loosening effect when knife 20 is pressed perpendicularly into the layer of potting compost 19 and retracted therefrom while the compost on the upper surface thereof is still being pressed downward. This is also a feature of the previous embodiments of fig. 2-5, though there substantially only in relation to the operation of the wide knife 20. Pivot arm 32 is then lowered and short knives 17 are pressed into the layer of potting compost. These then protrude through recesses in levelling surface 31. When U-frame 7 is subsequently moved upward again, short knives 17 are pulled out of the layer of potting compost 19 out of these recesses. The parts of the levelling surface 31 lying between the recesses hold in place the layer of potting compost thereunder with the cuts made by knives 17 therein. Prior thereto or thereafter the wide knife 20 is also retracted from the layer of potting compost, wherein post-tamping surface 22 holds the compost thereunder in place. Once U-frame 7 has been pulled upward by drive rod 9, pivot arm 32 with the wide knife therein is also retracted, pulled upward by means of cylinder 33.

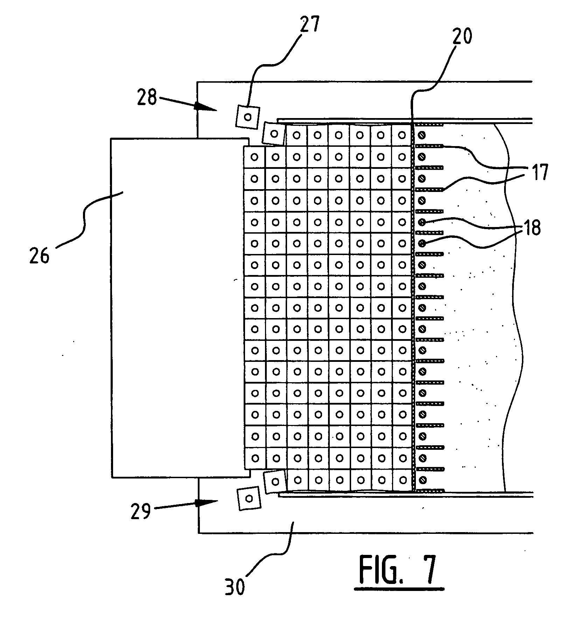

Fig. 7 shows that the composite knife 20, 17 has divided the tamped-down layer of potting compost 19 into press pots 27 in the above described manner. It is then further noted that two additional short knives 17 are provided and the long wide knife 20 corresponds to the combination of short knives 17 in order to create two rows of press pots extra to those required to fill a crate 26 with press pots. It has been found that the outer rows of press pots often lack quality and for this reason the extra rows of press pots 28, 29 are cut but, because of the known problems with quality, are dropped onto a return belt 30 which carries the press pots from rows 28, 29 back to feed 3 to enable reprocessing of the potting compost therefrom and so not allow any potting compost to be lost. Achieved at the same time is that only press pots 27 are placed in crate 26 which have a good quality known in advance in respect of the structure thereof. Disregarding the outer rows of press pots 28, 29 can prevent press pots particularly with a layered structure entering the crate or container 26. Not only are the outer rows of press pots 28, 29 disregarded, they are moreover returned for reuse so as to not allow any loss of potting compost.

Synchronized operation of the overall device 1 is one of the objects of the present invention, for which purpose the drive of the conveyor belt and those of short knives 17 and of the long wide knife 20 are adapted to each other, while only a single motor 10 still need be applied. Making the module 5 replaceable results in being able to adjust the dimensions of the press pots which can be cut or formed with device 1 by opting for another module with different intermediate distances between short knives 17 and/or optionally also different dimensions of the long knife 20. Although it is the intention to make the degree of filling of a crate as high as possible, this falls outside the scope of the present invention. The module is easily replaceable by releasing support points 15 from the module and by removing and replacing the module integrally with another module having different knives with different short or long intermediate spacings. Major intervention in the device is thus not necessary for alignment and synchronization thereof. It is only necessary to ensure a suitable transmission ratio of transmission 12 to enable transmission of the movement of motor 10 to conveyor belt 4 after replacement of a module 5 by another module 5 with different distances between knives 17 and/or 20. The alignment of the module itself is realized by a correct placing of suspension points 15 and corresponding points in frame 2.

After examination of the foregoing many alternative and additional embodiments, all lying within the scope of the present invention, will occur to the skilled person. These should all be deemed as embodiments of the invention, even though such additions and alternatives are not described explicitly here. It is thus possible to find solutions other than mechanical ones, with mechanical transmissions and rod constructions as described in the foregoing, for the purpose of synchronizing diverse components and parts of the device. It is further possible to make use of a further-reaching electronic control, although this will usually involve a plurality of motors. This is however not precluded from the scope of the present invention.

## Claims

1. Device for manufacturing press pots with potting compost, comprising:
- a feed (3) for providing a layer of potting compost;
- pressing means which act selectively on the layer of potting compost; and
- a knife (17, 20) for cutting the layer of potting compost into pot forms,
wherein at least the pressing means and the knife are accommodated in a frame (2) together with a conveyor (4) which extends from the feed through the frame, and the pressing means and the knife are disposed at least at a position along the conveyor,
**CHARACTERISED IN THAT**
the knife is in at least two parts, and comprises: a first cutter (20) and at least one second cutter (17) oriented substantially transversely of the first cutter, wherein the first and second cutter are individually movable for the purpose of acting successively on the potting compost.

2. Device as claimed in claim 1, wherein the first cutter (20) is oriented transversely of the conveyor.

3. Device as claimed in claim 1 or 2, wherein the second cutter (17) comprises at least two cutting elements having a length corresponding to an intended size of the press pots to be manufactured.

4. Device as claimed in claim 1, 2 or 3, wherein the conveyor (4) advances stepwise and the length at least corresponds to an advancing distance of one step at a time of the conveyor.

5. Device as claimed in at least one of the preceding claims, wherein the pressing means and the knife (17, 20) form a unit at a single position along the conveyor (4).

6. Device as claimed in at least one of the preceding claims, wherein gripping means connect to the conveyor (4) which can be selectively set into operation and which grip and transfer the cut pot forms into a container (26) intended for this purpose.

7. Device as claimed in claim 6, further comprising a supply for providing empty containers at the gripping means; and a discharge for discharging containers filled with pot forms from the gripping means.

8. Device as claimed in at least one of the preceding claims, wherein the conveyor comprises a conveyor belt (4) trained in an endless loop round reversing wheels, wherein a drive motor (10) is coupled to a reversing wheel of the conveyor (4) the furthest removed from the feed (3).

9. Device as claimed in at least one of the preceding claims, in particular claim 8, wherein the drive motor (10) is connected, via a ratchet wheel (13) for stepwise advancing of the conveyor (4), to at least one of the reversing wheels of the conveyor, in particular the reversing wheel of the conveyor located furthest from the feed.

10. Device as claimed in at least one of the preceding claims, wherein at least the knife (17, 20) is received in a cassette releasable from the frame (2).

11. Device as claimed in claim 10, wherein at least one of a number of cassettes can be arranged on the frame (2) by means of releasable couplings.

12. Device as claimed in claim 10 or 11, wherein at least the pressing means are also arranged in the cassette.

13. Device as claimed in at least one of the claims 10, 11 and 12, further comprising: a knife drive (23) for the knife (17, 20) which is associated via a releasable coupling with the knife.

14. Device as claimed in claim 13, wherein the knife drive (23) is mounted semi-permanently on the frame (2).

15. Device as claimed in claims 13 and 14, wherein a transmission is arranged between the knife and the knife drive with synchronizing means for adjusting the movements of the conveyor and the knife or knives relative to the potting compost.

## Patentansprüche

1. Vorrichtung zur Herstellung von Presstöpfen mit Blumenerde, umfassend:
- eine Zuführung (3) zur Bereitstellung einer Schicht aus Blumenerde;
- ein Drückmittel, das auf die Schicht der Blumenerde selektiv einwirkt, und
- ein Messer (17, 20) zum Schneiden der Schicht der Blumenerde in Topfformen,
wobei zumindest das Drückmittel und das Messer in einem Rahmen (2) zusammen mit einer Fördereinrichtung (4) aufgenommen sind, die sich von der Zuführung durch den Rahmen erstreckt, und das Drückmittel und das Messer sind an mindestens einer Stelle entlang der Fördereinrichtung angeordnet,
**dadurch gekennzeichnet, dass**
das Messer aus wenigstens zwei Teilen gebildet ist, umfassend: eine erste Schneide (20) und eine im Wesentlichen quer zur ersten Schneide ausgerichtete zweite Schneide (17), wobei die erste und die zweite Schneide zur aufeinander folgenden Einwirkung auf der Blumenerde einzeln beweglich sind.

2. Vorrichtung nach Anspruch 1, wobei die erste Schneide (20) quer zur Fördereinrichtung ausgerichtet ist.

3. Vorrichtung nach Anspruch 1 oder 2, wobei die zweite Schneide (17) mindestens zwei Schneidelemente umfasst, die eine der geforderten Größe der herzustellenden Presstöpfe entsprechende Länge aufweisen.

4. Vorrichtung nach Anspruch 1, 2 oder 3, wobei die Fördereinrichtung (4) schrittweise vorläuft und die Schrittlänge wenigstens einer Vorschublänge eines auf einmal ausgeführten Schrittes der Fördereinrichtung entspricht.

5. Vorrichtung nach wenigstens einem der vorhergehenden Ansprüche, wobei das Drückmittel und das Messer (17, 20) in einer gemeinsamen Position entlang der Fördereinrichtung (4) eine Einheit bilden.

6. Vorrichtung nach wenigstens einem der vorhergehenden Ansprüche, wobei mit der Fördereinrichtung (4) verbundene Greifmittel vorgesehen sind, die wahlweise in Betrieb setzbar sind und die die geschnittenen Topfformen greifen und in einen für diesen Zweck bestimmten Behälter (26) überführen.

7. Vorrichtung nach Anspruch 6, weiterhin umfassend eine Versorgungseinrichtung für die Bereitstellung von leeren Behältern am Greifmittel; und umfassend eine Entladungseinrichtung für das Entladen der mit Topfformen gefüllten Behälter aus dem Greifmittel.

8. Vorrichtung nach wenigstens einem der vorhergehenden Ansprüche, wobei die Fördereinrichtung ein Förderband (4) umfasst, das als Endlosband ausgebildet und um Umlenkrollen geschlungen ist, wobei ein Antriebsmotor (10) mit einer Umlenkrolle der Fördereinrichtung (4) gekoppelt ist, das am weitesten von der Zuführung (3) entfernt ist.

9. Vorrichtung nach wenigstens einem der vorhergehenden Ansprüche, insbesondere nach Anspruch 8, wobei der Antriebsmotor (10) für den schrittweisen Vorschub der Fördereinrichtung (4) über ein Schaltrad (13) mit mindestens einer der Umlenkrollen der Fördereinrichtung verbunden ist, insbesondere mit der Umlenkrolle der Fördereinrichtung, die von der Zuführung am weitesten entfernt ist.

10. Vorrichtung nach wenigstens einem der vorhergehenden Ansprüche, wobei zumindest das Messer (17, 20) in einer aus dem Rahmen (2) entnehmbaren Kassette aufgenommen ist.

11. Vorrichtung nach Anspruch 10, wobei mindestens eine Kassette aus einer Reihe von Kassetten mittels lösbarer Kupplungen im Rahmen (2) anordbar ist.

12. Vorrichtung nach Anspruch 10 oder 11, wobei zumindest auch das Drückmittel in der Kassette angeordnet ist.

13. Vorrichtung nach wenigstens einem der Ansprüche 10, 11 und 12, weiterhin umfassend einen Messerantrieb (23) für das Messer (17, 20), der über eine lösbare Kupplung mit dem Messer verbunden ist.

14. Vorrichtung nach Anspruch 13, wobei der Messerantrieb (23) semipermanent am Rahmen (2) montiert ist.

15. Vorrichtung nach Anspruch 13 und 14, wobei zwischen dem Messer und dem Messerantrieb eine Übertragungseinheit mit Synchronisationsmitteln zur Einstellung der Bewegungen der Fördereinrichtung und des Messers oder der Messer relativ zur Blumenerde angeordnet ist.

## Revendications

1. Dispositif pour fabriquer des pots de terreau comprimés avec du compost destiné à être mis en pot, comprenant :
- une alimentation (3) pour fournir une couche de compost destiné à être mis en pot ;
- des moyens de pression qui agissent sélectivement sur la couche de compost destiné à être mis en pot ; et
- un couteau (17, 20) pour couper la couche de compost destiné à être mis en pot en formes de pot,
dans lequel au moins les moyens de pression et le couteau sont logés dans un châssis (2) conjointement à un convoyeur (4) qui s'étend à partir de l'alimentation à travers le châssis, et les moyens de pression et le couteau sont disposés au moins dans une position située le long du convoyeur,
**caractérisé en ce que** :
le couteau est au moins en deux parties, et comprend : un premier dispositif de coupe (20) et au moins un deuxième dispositif de coupe (17) orienté de manière sensiblement transversale par rapport au premier dispositif de coupe, dans lequel les premier et deuxième dispositifs de coupe sont individuellement mobiles afin d'agir successivement sur le compost destiné à être mis en pot.

2. Dispositif selon la revendication 1, dans lequel le premier dispositif de coupe (20) est orienté de manière transversale par rapport au convoyeur.

3. Dispositif selon la revendication 1 ou 2, dans lequel le deuxième dispositif de coupe (17) comprend au moins deux éléments de coupe ayant une longueur correspondant à une taille prévue des pots comprimés à fabriquer.

4. Dispositif selon la revendication 1, 2 ou 3, dans lequel le convoyeur (4) avance par palier et la longueur correspond au moins à une distance d'avancement d'un palier à la fois du convoyeur.

5. Dispositif selon au moins l'une des revendications précédentes, dans lequel les moyens de pression et le couteau (17, 20) forment une unité dans une position unique le long du convoyeur (4).

6. Dispositif selon au moins l'une des revendications précédentes, dans lequel des moyens de préhension qui se raccordent au convoyeur (4) peuvent être sélectivement placés en fonctionnement et saisissent et transfèrent les formes de pot coupées dans un conteneur (26) prévu à cet effet.

7. Dispositif selon la revendication 6, comprenant en outre une alimentation pour fournir des conteneurs vides aux moyens de préhension ; et une décharge pour décharger les conteneurs remplis avec les formes de pot des moyens de préhension.

8. Dispositif selon au moins l'une des revendications précédentes, dans lequel le convoyeur comprend une courroie transporteuse (4) entraînée sur une boucle sans fin autour de roues d'inversion, dans lequel un moteur d'entraînement (10) est couplé à la roue d'inversion du convoyeur (4) la plus éloignée de l'alimentation (3).

9. Dispositif selon au moins l'une des revendications précédentes, en particulier la revendication 8, dans lequel le moteur d'entraînement (10) est raccordé, via une roue à encliquetage (13) pour l'avancement par palier du convoyeur (4), à au moins l'une des roues d'inversion du convoyeur, en particulier la roue d'inversion du convoyeur la plus éloignée de l'alimentation.

10. Dispositif selon au moins l'une des revendications précédentes, dans lequel au moins le couteau (17, 20) est reçu dans une cassette amovible du châssis (2).

11. Dispositif selon la revendication 10, dans lequel au moins l'une d'un certain nombre de cassettes peut être agencée sur le châssis (2) au moyen de couplages amovibles.

12. Dispositif selon la revendication 10 ou 11, dans lequel au moins les moyens de pression sont également agencés dans la cassette.

13. Dispositif selon au moins l'une des revendications 10, 11 et 12, comprenant en outre : un dispositif d'entraînement de couteau (23) pour le couteau (17, 20) qui est associé, par l'intermédiaire d'un couplage amovible, au couteau.

14. Dispositif selon la revendication 13, dans lequel le dispositif d'entraînement de couteau (23) est monté de manière semi-permanente sur le châssis (2).

15. Dispositif selon les revendications 13 et 14, dans lequel la transmission est agencée entre le couteau et le dispositif d'entraînement de couteau avec des moyens de synchronisation pour ajuster les mouvements du convoyeur et du couteau ou des couteaux par rapport au compost destiné à être mis en pot.
